# EUROPÄISCHE PATENTSCHRIFT

(11) **EP 0 944 795 B1**
(45) Veröffentlichungstag und Bekanntmachung des Hinweises auf die Patenterteilung: **06.08.2003**
(21) Anmeldenummer: 97953832.9
(22) Anmeldetag: 16.12.1997
(51) Int. Cl.: F16L 37/04

(54) **ZUM ANSCHLUSS EINES SCHLAUCHES MIT EINEM ZWEITEN BAUTEIL VORGESEHENE SCHLAUCHKUPPLUNG**
HOSE COUPLING FOR CONNECTING A HOSE WITH A SECOND COMPONENT
RACCORD PERMETTANT DE RACCORDER UN TUYAU A UN DEUXIEME ELEMENT

(30) Priorität: 20.12.1996 DE 19653257
(43) Veröffentlichungstag der Anmeldung: 29.09.1999
(73) Patentinhaber: Siemens Aktiengesellschaft, 80333 München (DE)
(72) Erfinder: HOFFMANN, Heinrich, D-36266 Heringen (DE); SCHLEIN, Rolf-Dieter, D-36199 Rotenburg (DE)
(86) Internationale Anmeldenummer: EP9707064
(87) Internationale Veröffentlichungsnummer: WO98028565

(56) Entgegenhaltungen:
- DE-A- 4 305 609
- DE-A- 4 308 367
- FR-A- 2 001 535
- FR-A- 2 157 651
- US-A- 4 152 017
- US-A- 4 991 882

## Beschreibung

Die Erfindung betrifft eine zum Anschluß eines Schlauches mit einem zweiten Bauteil vorgesehene Schlauchkupplung für selten zu wechselnde Schläuche, insbesondere für eine Scheibenreinigungsanlage eines Kraftfahrzeuges, mit einem zum Aufstecken des Schlauches ausgebildeten Schlauchstutzen.

Solche Schlauchkupplungen werden in heutigen Kraftfahrzeuge zum Anschluß einer Düse oder eines Verteilers einer Scheibenreinigungsanlage häufig eingesetzt und sind damit bekannt. Das zweite Bauteil weist hierbei eine den anzuschließenden Schläuchen entsprechende Anzahl von Schlauchstutzen auf und ist einteilig mit dem Verteiler oder der Düse gefertigt. Im einfachsten Fall ist das zweite Bauteil rohrförmig mit zwei Schlauchstutzen gestaltet.

Nachteilig bei der bekannten Schlauchkupplung ist, daß der Schlauch nur mit hohem Kraftaufwand auf den Schlauchstutzen aufzustecken ist und hierfür sehr viel Zeit nötig ist. Dies führt insbesondere bei der Scheibenreinigungsanlage in einem Kraftfahrzeug zu einer sehr kostenintensiven Endmontage.

Bei häufig zu wechselnden Schläuchen, wie beispielsweise Gartenschläuchen, sind zweiteilige Schlauchkupplungen bekannt geworden, welche sich mittels eines von Hand betätigbaren Mechanismusses schnell trennen und verbinden lassen. Durch den Mechanismus zum Trennen und Verbinden gestaltet sich jedoch die Schlauchkupplung sehr aufwendig.

Eine Schlauchkupplung gemäß Obergegriff von Anspruch 1 ist aus DE-A-4 305 609 bekannt.

Der Erfindung liegt das Problem zugrunde, eine gattungsgemäße Schlauchkupplung so zu gestalten, daß sie besonders einfach aufgebaut ist und bei der Endmontage möglichst schnell montiert werden kann.

Dieses Problem wird erfindungsgemäß durch die Merkmale von Anspruch 1 gelöst.

Durch diese Gestaltung wird der Schlauch wie bei der bekannten Schlauchkupplung auf den Schlauchstutzen aufgesteckt. Der Schlauchstutzen läßt sich mit dem zweiten Bauteil durch ein einfaches Einschieben des Führungsbundes des einen Kupplungsteils in die Hülse des anderen Kupplungsteils mit geringem Kraftaufwand und damit in besonders kurzer Zeit verbinden. Hierdurch erfordert die Montage der Scheibenreinigungsanlage in dem Kraftfahrzeug sehr wenig Zeit und ist damit besonders kostengünstig. Weiterhin benötigt die erfindungsgemäße Schlauchkupplung keinen zusätzlichen Mechanismus zum Verbinden und Trennen der Kupplungsteile, so daß sie besonders einfach aufgebaut und zudem kostengünstig herstellbar ist. Im montierten Zustand der Schlauchkupplung liegt der dem freien Ende des Führungsbundes abgewandte Rand an einem Rand der Nut an und dichtet die Schlauchkupplung ab. Bei einem besonders hohen Druck innerhalb der Scheibenwaschanlage wird der Rand des Führungsbundes zusätzlich gegen den Rand der Nut gedrückt, so daß die erfindungsgemäße Schlauchkupplung ohne zusätzliche Dichtelemente besonders dicht ist.

Der Führungsbund könnte beispielsweise nach außen gewölbt sein. Hierdurch ließe sich der Führungsbund in der Nut einfach verschwenken. Bei der in dem Kraftfahrzeug montierten Scheibenreinigungsanlage sind die Schlauchkupplungen jedoch gemäß einer vorteilhaften Weiterbildung der Erfindung zuverlässig in ihrer vorgesehenen Position gehalten, wenn der Führungsbund des einen Kupplungsteils einen zylindrischen Abschnitt aufweist. Hierdurch werden Undichtigkeiten der Schlauchkupplungen dauerhaft vermieden.

Zur weiteren Verbesserung der Dichtheit der erfindungsgemäßen Schlauchkupplung trägt es bei, wenn das eine Kupplungsteil an seinem freien Ende einen an den Führungsbund angrenzenden Konus und die Nut der Hülse im Bereich des Konusses des Führungsbundes eine Fase aufweist. Hierdurch haben die Kupplungsteile beim Zusammenstecken einen nachgiebigen Anschlag, was ein sicheres Einrasten des Führungsbundes in der Nut gewährleistet. Weiterhin dient die Fase als Toleranzausgleich zwischen dem Führungsbund und der Nut.

Die Kupplungsteile lassen sich gemäß einer anderen vorteilhaften Weiterbildung der Erfindung ohne eine Beschädigung der Bauteile demontieren, wenn die Nut der Hülse im Bereich des dem Konus abgewandten Endes des Führungsbundes eine Fase aufweist.

Eine Verdrehung der Kupplungsteile gegeneinander läßt sich gemäß einer anderen vorteilhaften Weiterbildung der Erfindung zuverlässig vermeiden, wenn das eine Kupplungsteil im Bereich des Konusses einen axialen, in eine Vertiefung der Hülse eingreifenden Vorsprung als Verdrehsicherung aufweist.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: eine erfindungsgemäße Schlauchkupplung mit zwei Kupplungsteilen in einer Schnittdarstellung,
- Figur 2: eine stark vergrößerte Darstellung einer Nut in einer Hülse einer der Kupplungsteile aus Figur 1.

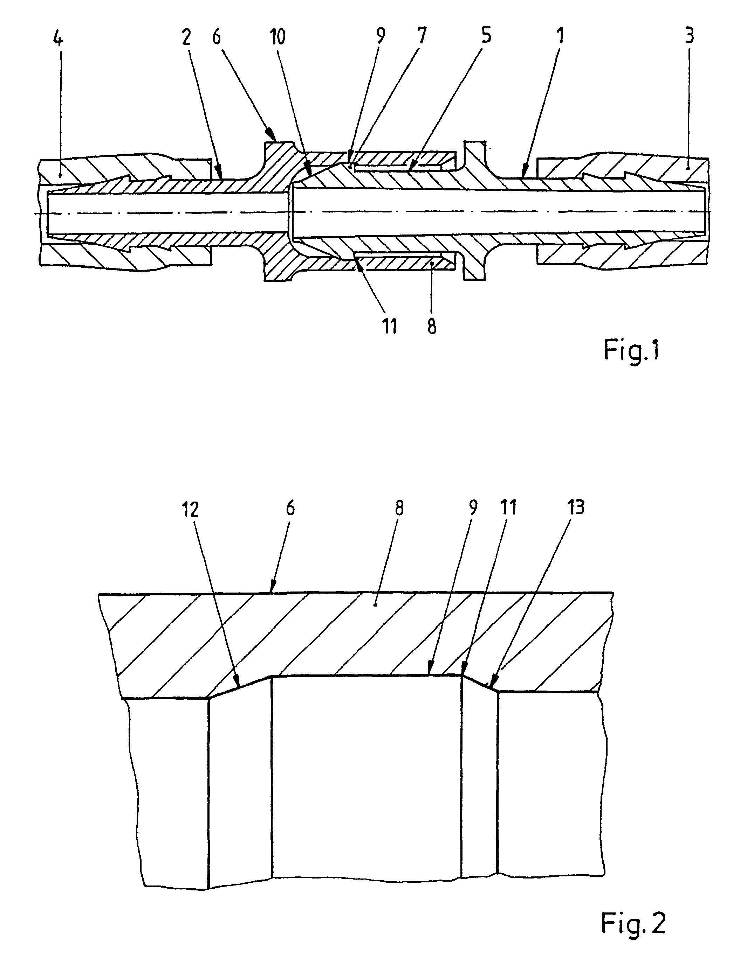

Die Figur 1 zeigt eine Schlauchkupplung mit zwei Schlauchstutzen 1, 2, auf denen jeweils ein Schlauch 3, 4 einer Scheibenreinigungsanlage eines Kraftfahrzeuges aufgesteckt ist. Die Schlauchstutzen 1, 2 weisen jeweils ein Kupplungsteil 5, 6 auf. Eines der Kupplungsteile 5 hat einen radial umlaufenden Führungsbund 7, der in eine Hülse 8 des anderen Kupplungsteiles 6 eingeführt werden kann. Die Hülse 8 ist elastisch gestaltet und hat eine dem Führungsbund 7 in Breite und Durchmesser entsprechende Nut 9. An seinem freien Ende weist das eine Kupplungsteil 5 einen an den Führungsbund 7 angrenzenden Konus 10 zum leichten Einführen in die Hülse 8 auf.

In dem dargestellten Zustand der Schlauchkupplung befindet sich der Führungsbund 7 in der Nut 9 der Hülse 8. Ein die Nut 9 zum offenen Ende der Hülse 8 hin begrenzender Rand 11 hintergreift hierbei den Führungsbund 7 und erzeugt damit eine formschlüssige Verbindung der beiden Schlauchstutzen 1, 2. Bei einem Überdruck in den Schläuchen 3, 4 wird die Schlauchkupplung auseinandergedrückt, so daß der Führungsbund 7 gegen den die Nut 9 zum offenen Ende der Hülse 8 hin begrenzenden Rand 11 gepreßt wird. Hierdurch wird eine hohe Dichtigkeit der Schlauchkupplung erreicht. Der Führungsbund 7 ist zur Vermeidung eines Kippens in der Nut 9 zylindrisch gestaltet. Die Schlauchstutzen 1, 2 sind hierdurch in ihrer vorgesehenen Position zueinander ausgerichtet.

Die Nut 9 der Hülse 8 ist in Figur 2 stark vergrößert eingezeichnet. Die Nut 9 hat einen zylindrischen Bereich, an dem sich beidseitig Fasen 12, 13 anschließen. Die eine Fase 12 dient als Anschlag für den in Figur 1 dargestellten Konus 10 des Führungsbundes 7 des anderen Kupplungsteils 5. Die zweite Fase 13 ermöglicht eine einfache Demontage der Schlauchkupplung.

## Patentansprüche

1. Schlauchkupplung, insbesondere für eine Scheibenreinigungsanlage eines Kraftfahrzeugs, bestehend aus zwei Schlauchstutzen (1, 2), die in an ihrem einen Ende zum Aufstecken eines Schlauches (3, 4) ausgebildet sind und an ihrem anderen Ende jeweils ein Kupplungsteil (5, 6) aufweisen, wobei ein Kupplungsteil (5) einen radial umlaufenden Führungsbund (7), der zum freien Ende des Kupplungsteils (5) hin einen Konus (10) mit abnehmendem Durchmesser aufweist, und das andere Kupplungsteil (6) eine elastische Hülse (8) mit einer Nut (9) aufweist, die im Bereich des Konuses (10) des Führungsbundes (7) eine Fase (12) aufweist, **dadurch gekennzeichnet, dass** die Nut (9) des einen Kupplungsteils (6) dem Führungsbund (7) des anderen Kupplungsteils (5) in der Breite und dem Durchmesser entspricht und dass der Konus (10) mit abnehmendem so ausgebildet ist, dass das freie Ende des Kupplungsteils (5) den kleinsten Durchmesser aufweist und einen Abstand zu dem Innendurchmesser der elastischen Hülse (8) besitzt.

2. Schlauchkupplung nach Anspruch 1, **dadurch gekennzeichnet, daß** der Führungsbund (7) einen zylindrischen Abschnitt aufweist.

3. Schlauchkupplung nach Anspruch 1 oder 2, **dadurch gekennzeichnet, dass** die Nut (9) der Hülse (8) im Bereich des dem Konus abgewandten Endes des Führungsbundes (7) eine Fase (13) auf weist.

4. Schlauchkupplung nach einem der Ansprüche 1 bis 3, **dadurch gekennzeichnet, dass** das eine Kupplungsteil (5) im Bereich des Konusses (10) einen axialen, in die Vertiefung der Hülse (8) eingreifenden Vorsprung als Verdrehsicherung aufweist.

## Claims

1. Hose coupling, in particular for a windshield washer unit of a motor vehicle, consisting of two hose fittings (1, 2), which in [sic] at one end are designed so that a hose (3, 4) can be slipped onto them and each have a coupling part (5, 6) at their other end, one coupling part (5) having a radially encircling guide collar (7) which, towards the free end of the coupling part (5), has a cone (10) of decreasing diameter, and the other coupling part having an elastic sleeve (8) with a groove (9) which has a bevel (12) in the region of the cone (10) of the guide collar (7), **characterized in that** the groove (9) of the one coupling part (6) corresponds in width and diameter to the guide collar (7) of the other coupling part (5), and **in that** cone (10) of decreasing diameter is designed such that the free end of the coupling part (5) has the smallest diameter and has a spacing relative to the inside diameter of the elastic sleeve (8).

2. Hose coupling according to Claim 1, **characterized in that** the guide collar (7) has a cylindrical section.

3. Hose coupling according to Claim 1 or 2, the groove (9) of the sleeve (8) has a bevel (13) in the region of that end of the guide collar (7) which is remote from the cone.

4. Hose coupling according to one of Claims 1 to 3, **characterized in that** the one coupling part (5), in the region of the cone (10), has, as an anti-rotation locking means, an axial projection engaging in a recess of the sleeve (8).

## Revendications

1. Accouplement de flexible, en particulier pour un dispositif de lave-glaces d'un véhicule automobile, constitué de deux manchons de flexible (1, 2), qui sont réalisés, à l'une de leurs extrémités, pour l'enfichage d'un flexible (3, 4) et qui, à leur autre extrémité, présentent chacun une pièce d'accouplement (5, 6), dans lequel l'une des pièces d'accouplement (5) présente une collerette de guidage (7), faisant le tour radialement, qui présente, vers l'extrémité libre de la pièce d'accouplement (5), un cône (10) de diamètre décroissant, et l'autre pièce d'accouplement (6) présente une douille élastique (8), comportant une rainure (9), qui présente, dans la zone du cône (10) de la collerette de guidage (7), un chanfrein (12),
**caractérisé en ce que**
la rainure (9) de l'une des pièces d'accouplement (6) correspond, en largeur et en diamètre, à la collerette de guidage (7) de l'autre pièce d'accouplement (5), et **en ce que** le cône (10), comportant un diamètre décroissant, est réalisé de telle façon que l'extrémité libre de la pièce d'accouplement (5) a le diamètre le plus petit et présente un écart par rapport au diamètre intérieur de la douille élastique (8).

2. Accouplement de flexible suivant la revendication 1, **caractérisé en ce que** la collerette de guidage (7) présente une partie cylindrique.

3. Accouplement de flexible suivant la revendication 1 ou 2, **caractérisé en ce que** la rainure (9) de la douille (8) présente, un chanfrein (13) dans la zone de l'extrémité de la collerette (7) opposée au cône.

4. Accouplement de flexible suivant l'une des revendications 1 à 3, **caractérisé en ce que** l'une des pièces d'accouplement, (5), présente, comme sécurité anti-rotation, dans la zone du cône (10), une saillie axiale, venant en prise dans l'évidement de la douille (8).
